# DEMANDE DE BREVET EUROPEEN

(11) **EP 0 541 416 A1**
(43) Date de publication de la demande: **12.05.1993**
(21) Numéro de dépôt: 92402856.6
(22) Date de dépôt: 19.10.1992
(51) Int. Cl.: C04B 35/02, C04B 35/66, B22D 41/02

(54) **Procédé de revêtement d'un répartiteur de coulée continue par un matériau réfractaire, répartiteur et matériau réfractaire résultant de la mise en oeuvre de ce procédé**

(30) Priorité: 04.11.1991 FR 9113721
(71) Demandeur: SOLLAC, F-92800 Puteaux (FR); LE LABORATOIRE METALLURGIQUE, F-57146 Woippy (FR)
(72) Inventeur: Poirier, Jacques, F-59240 Dunkerque (FR); Provost, Gilbert, F-78610 Les Breviaires (FR); Martin, Jean, F-57000 Metz (FR); Rozières, Jean, F-57000 Metz (FR)
(74) Mandataire: Martin, Jean-Paul

(57) **Abrégé**

Procédé de revêtement d'un répartiteur de coulée continue des métaux, notamment d'acier, selon lequel on prépare le matériau constitutif du revêtement réfractaire d'usure dudit répartiteur à l'aide de dolomie naturelle crue ou de calcite naturelle crue ou d'un mélange de ces deux matériaux, que l'on choisit avec une granulométrie comprise entre 0 et 5 mm, on incorpore à cette matière crue un liant dans des proportions de 0,4 à 5 % en poids et un plastifiant minéral ou organique dans des proportions de 0,2 à 3 % en poids, et après sa mise en place sur le répartiteur sous forme aqueuse, on procède à la décarbonatation de ce revêtement lors de son séchage et de sa cuisson, caractérisé en ce que on incorpore également audit matériau du revêtement au moins un composé présentant des propriétés de retrait à des températures inférieures à 700°C environ.

Ce composé est préférentiellement un hydroxyde de métal alcalino-terreux ou un mélange de tels hydroxydes, incorporé audit matériau du revêtement à raison de 5 à 20 %.

L'invention a également pour objet un revêtement de répartiteur et un répartiteur ainsi revêtu.

## Description

La présente invention a trait au domaine de la coulée continue des métaux, notamment de l'acier. Elle concerne plus particulièrement les répartiteurs, ou tundishes, et plus spécialement encore, leur revêtement réfractaire d'usure destiné à être au contact direct du métal liquide pendant la coulée.

Le revêtement réfractaire d'usure d'un répartiteur de coulée continue de l'acier est aujourd'hui fréquemment appliqué sur une sous-couche permanente, le plus généralement en béton réfractaire dense, sous forme aqueuse au moyen de différentes techniques telles que la projection, le truellage, le coulage, le coulage-vibration ou le damage. Ce revêtement est ensuite séché avant l'utilisation du répartiteur.

La magnésie est le matériau le plus couramment utilisé pour cet usage, en raison, notamment, de sa faible réactivité vis-à-vis des éléments désoxydants forts, tels que l'aluminium ou le calcium, contenus dans l'acier liquide. Toutefois, les revêtements magnésiens habituellement utilisés ont toujours une teneur en silice non négligeable (de 5 à 15 %). Or, la réduction de la silice par les désoxydants forts conduit à la formation d'inclusions non-métalliques, qui viennent polluer le métal. Il est donc nécessaire que la partie du revêtement qui est en contact avec le métal liquide ait une teneur en silice aussi faible que possible, lorsqu'une propreté inclusionnaire élevée est recherchée pour le produit coulé. L'utilisation de magnésie d'une pureté plus grande est possible, mais augmente sensiblement le coût du revêtement.

Un autre inconvénient de la magnésie est sa masse volumique apparente élevée, défavorable aux propriétés d'isolation thermique du revêtement. Même dans les cas où le revêtement est allégé par l'incorporation de fibres diverses, sa masse volumique demeure de l'ordre de 1600 à 1800 kg/m³.

La Demanderesse a proposé dans le document WO 90/09970 d'utiliser un revêtement réfractaire à base de dolomie crue MgCO₃-CaCO₃, ou de calcite crue CaCO₃ naturelles, ou d'un mélange de ces deux composés. Le revêtement est d'abord appliqué sous forme aqueuse contre la sous-couche réfractaire permanente, au moyen des techniques classiques précédemment citées. Puis il est chauffé à une température qui en son sein doit atteindre entre 800 et 950°C pour provoquer son séchage, et surtout sa décarbonatation in situ. On se retrouve ainsi avec un revêtement à base de CaO ou CaO-MgO présentant une densité inférieure à 1500 kg/m³, ce qui lui confère des propriétés isolantes très satisfaisantes. D'autre part, du fait des faibles teneurs en silice, alumine et oxydes de fer de la dolomie et de la calcite crues, ce revêtement présente une grande inertie chimique vis-à-vis de l'acier liquide.

La granulométrie de la dolomie et de la calcite crues sont comprises entre 0 et 5 mm. Elles sont mélangées à un liant et à un plastifiant minéral ou organique, dans des proportions respectives de 0,5 à 5 % et 0,2 à 3 % en poids.

Ce procédé de revêtement donne toute satisfaction pour des répartiteurs de petit taille. Cependant, lorsqu'il est appliqué à des répartiteurs d'une capacité de plusieurs dizaines de tonnes de métal liquide, tels qu'il en existe sur les grosses machines de coulée continue récentes, on peut observer que lors de son chauffage ce revêtement se décolle de la surface sur laquelle il a été appliqué, à cause de sa dilatation. Ce décollement rend le revêtement inutilisable.

Le but de l'invention est d'éviter ce décollement, et de rendre ainsi possible l'utilisation d'un revêtement en dolomie ou calcite crue décarbonatée même sur de grands répartiteurs.

A cet effet l'invention a pour objet un procédé de revêtement d'un répartiteur de coulée continue des métaux, notamment d'acier, selon lequel on prépare le matériau constitutif du revêtement réfractaire d'usure dudit répartiteur à l'aide de dolomie naturelle crue ou de calcite naturelle crue ou d'un mélange de ces deux matériaux, que l'on choisit avec une granulométrie comprise entre 0 et 5 mm, on incorpore à cette matière crue un liant dans des proportions de 0,4 à 5 % en poids et un plastifiant minéral ou organique dans des proportions de 0,2 à 3 % en poids, et après sa mise en place sur le répartiteur sous forme aqueuse, on procède à la décarbonatation de ce revêtement lors de son séchage et de sa cuisson, caractérisé en ce que on incorpore également audit matériau du revêtement au moins un composé présentant des propriétés de retrait à des températures inférieures à 700°C environ.

Dans un exemple de réalisation, ce composé présentant des propriétés de retrait est un hydroxyde de métal alcalino-terreux ou un mélange de tels hydroxydes, incorporé dans le matériau dudit revêtement à raison de 5 à 20 % en poids.

L'invention a également pour objet un revêtement de répartiteur obtenu après application de ce procédé, ainsi qu'un répartiteur ainsi revêtu.

Comme on l'aura compris, l'invention consiste à incorporer au revêtement un composé qui, au cours de la phase de séchage-décarbonatation, va provoquer un retrait destiné à compenser par anticipation la dilatation qui est habituellement à l'origine du décollement du revêtement.

L'invention sera mieux comprise à la lecture de la description qui suit.

Comme on l'a vu, après la mise en place du revêtement à base de dolomie ou de calcite crue, a lieu une phase de chauffage. Elle a pour buts de sécher le revêtement qui, rappelons-le, a été mis en place sous forme aqueuse, et surtout de provoquer la décarbonatation de la dolomie et/ou de la calcite. CaCO₃ se transforme ainsi en CaO, et MgCO₃ en MgO. Les vides ainsi créés dans le revêtement permettent d'obtenir une densité finale inférieure à 1500 kg/m³, et de préférence comprise entre 1100 et 1400 kg/m³, à comparer aux 2800 kg/m³ de la dolomie crue naturelle, et aux 1600-1800 kg/m³ des revêtements magnésiens habituels. La température minimale à atteindre au coeur du revêtement pour une décarbonatation totale est de 950°C, ce qui implique d'atteindre une température superficielle de plus de 1200°C. Un tel chauffage provoque une, notable dilatation, source de contraintes à l'intérieur du revêtement. Ces contraintes se concentrent plus particulièrement dans la zone médiane des parois du répartiteur, et elles peuvent aboutir à un décollement du revêtement dans le cas des répartiteurs dont les grandes parois atteignent plusieurs mètres de long.

Selon l'invention, une solution à ce problème consiste à incorporer au revêtement un ou des composés qui ont la propriété de se contracter lorsqu'ils sont chauffés et se décomposent. Cette contraction, ou retrait, doit se produire à une température inférieure à celle à laquelle les risques de décollement du revêtement commencent à exister. Classiquement, cette dernière température est de l'ordre de 700°C. Si ce retrait se produit dès avant que le décollement ait eu la possibilité de s'initier, il entraîne une compensation anticipée d'au moins une partie de la dilatation que le revêtement a déjà subie et subira lors des étapes ultérieures du chauffage. Ainsi, le revêtement voit sa déformation en cours de chauffage sensiblement diminuée, ce qui supprime les risques de décollement si le ou les composés provoquant le retrait et leur teneur dans le revêtement ont été convenablement choisis.

De tels composés sont à rechercher, par exemple, parmi les hydroxydes qui ont la propriété de se décomposer à des températures inférieures à 700°C. Les hydroxydes de métaux alcalino-terreux, comme les hydroxydes de calcium Ca(0H)₂ et de magnésium Mg(0H)₂, seuls ou mélangés en proportions quelconques, sont particulièrement adaptés à cet usage, car leur décomposition se produit essentiellement entre 350 et 500°C. D'autre part cette décomposition provoque un retrait suffisant pour compenser la dilatation du revêtement lors des étapes ultérieures du chauffage lorsque ces hydroxydes sont présents à raison de 5 à 20 % au total (ces teneurs et toutes celles qui suivront sont données en pourcentages pondéraux dans le matériau non encore mis sous forme aqueuse et destiné à former le revêtement). Enfin, cette décomposition produit, outre de l'eau qui s'évapore, de la chaux et/ou de la magnésie, c'est-à-dire précisément les constituants essentiels du revêtement dans sa forme finale, destinée à recevoir le métal liquide. On obtient ainsi un revêtement parfaitement stable pendant tout son chauffage, quelle que soit la taille de la surface sur laquelle il est appliqué. La densité et les autres propriétés physiques de ce revêtement sont très sensiblement les mêmes que celles du revêtement selon l'Art Antérieur.

Enfin, ces hydroxydes étant des produits courants, le prix de revient du revêtement n'en est que peu affecté.

Outre la dolomie crue et/ou la calcite et les hydroxydes de calcium et/ou de magnésium, à raison de 5 à 20 %, le matériau destiné à former le revêtement selon l'invention comporte les mêmes composants que les revêtements décrits dans le document WO 90/09970, à savoir :
- un liant classique, tel que du silicate de sodium à raison de 0,4 à 5 % ;
- et un plastifiant minéral, tel que l'argile, ou organique, à raison de 0,2 à 3 %, pour éviter la migration du liant en cours de séchage.

La granulométrie des particules de dolomie crue et/ou de calcite crue est inférieure à 5 mm, et préférentiellement inférieure à 1 mm. Dans ce dernier cas, il est de plus recommandé que 15 à 40 % des particules aient une granulométrie inférieure à 0,1 mm.

Bien entendu, d'autre composés présentant des propriétés de retrait comparables à celles des hydroxydes de calcium et de magnésium peuvent être utilisés, pourvu que leur décompositon ne donne pas naissance à un composé susceptible d'entraîner une pollution du métal liquide. Leurs teneurs devront être adaptées en fonction de leurs propriétés de retrait intrinsèques, et de l'ampleur du retrait qu'ils doivent procurer.

De manière connue dans les revêtements classiques, on peut également ajouter à ces matériaux un ou des minéralisateurs, tels que des composés du bore ou des chlorures de métaux alcalins, dans des proportions ne dépassant pas au total 5 % en poids. Ils ont pour effet de diminuer la friabilité du revêtement après son application. Ces produits étant décomposés lors de la cuisson du revêtement, ils ne peuvent constituer une source de pollution pour le métal.

A titre d'exemple, une composition possible pour un revêtement selon l'invention est :
- dolomie 88 %
- argile 0,5 %
- silicate de sodium 1 %
- fibres organiques 0,2 %
- hydroxyde de calcium 10 %

Une autre composition possible est :
- calcite 92 %
- argile 0,5 %
- silicate de sodium 1 %
- fibres organiques 0,2 %
- fibres minérales 0,5 %
- hydroxyde de calcium 5 %
- colemanite (3 B₂0₃, 2 CaO, 5 H₂0) 0,5 %

Comme précédemment, les teneurs de ces composants sont données en pourcentages pondéraux dans le matériau destiné à former le revêtement, non encore mis sous forme aqueuse.

## Revendications

**1)** Procédé de revêtement d'un répartiteur de coulée continue des métaux, notamment d'acier, selon lequel on prépare le matériau constitutif du revêtement réfractaire d'usure dudit répartiteur à l'aide de dolomie naturelle crue ou de calcite naturelle crue ou d'un mélange de ces deux matériaux, que l'on choisit avec une granulométrie comprise entre 0 et 5 mm, on incorpore à cette matière crue un liant dans des proportions de 0,4 à 5 % en poids et un plastifiant minéral ou organique dans des proportions de 0,2 à 3 % en poids, et après sa mise en place sur le répartiteur sous forme aqueuse, on procède à la décarbonatation de ce revêtement lors de son séchage et de sa cuisson, caractérisé en ce que on incorpore également audit matériau du revêtement au moins un composé présentant des propriétés de retrait à des températures inférieures à 700°C environ.

**2)** Procédé selon la revendication 1, caractérisé en ce que ledit composé présentant des propriétés de retrait est un hydroxyde de métal alcalino-terreux ou un mélange de tels hydroxydes, et en ce qu'on l'incorpore audit matériau du revêtement à raison de 5 à 20 % en poids.

**3)** Procédé selon la revendication 1 ou 2, caractérisé en ce que l'on choisit une granulométrie de la dolomie crue et de la calcite crue de préférence comprise entre 0 et 1 mm.

**4)** Procédé selon l'une des revendications 1 à 3, caractérisé en ce que l'on choisit comme liant du silicate de sodium.

**5)** Procédé selon l'une des revendication 1 à 4, caractérisé en ce que l'on choisit comme plastifiant de l'argile.

**6)** Répartiteur de coulée continue des métaux, notamment d'acier, pourvu d'un revêtement réfractaire d'usure ayant été mis en place sous forme aqueuse, composé de dolomie naturelle crue décarbonatée ou de calcite naturelle crue décarbonatée, ou d'un mélange des deux, dont la granulométrie est comprise entre 0 et 5 mm, d'un liant présent avant la mise sous forme aqueuse dans une proportion de 0,4 à 5 % en poids et d'un plastifiant présent avant la mise sous forme aqueuse dans une proportion de à 0,2 à 3 % en poids, caractérisé en ce que ledit revêtement est également composé avant la mise sous forme aqueuse d'un composé au moins présentant des propriétés de retrait à des températures inférieures à 700°C environ.

**7)** Répartiteur selon la revendication 6, caractérisé en ce que ledit composé présentant des propriétés de retrait est un hdyroxyde d'un métal alcalino-terreux ou un mélange de tels hydroxydes, présent avant la mise sous forme aqueuse dans une proportion de 5 à 20 % en poids.

**8)** Revêtement réfractaire d'usure pour répartiteur de coulée continue de métaux, notamment d'acier, constitué initialement de dolomie naturelle crue, décarbonatée in situ, ou de calcite naturelle crue, décarbonatée in situ, ou d'un mélange de ces deux matériaux, dont la granulométrie est comprise entre 0 et 5 mm, et comprenant initialement un liant dans une proportion initiale de 0,4 à 5 % en poids et un plastifiant minéral ou organique dans une proportion initiale de 0,2 à 3 % en poids, caractérisé en ce qu'il comprend également initialement au moins un composé présentant des propriétés de retrait à des températures inférieures à 700°C environ.

**9)** Revêtement réfractaire selon la revendication 8, caractérisé en ce que ledit composé présentant des propriétés de retrait est un hydroxyde d'un métal alcalino-terreux ou un mélange de tels hydroxydes, présent dans une proportion initiale de 5 à 20 % en poids.

**10)** Revêtement réfractaire selon la revendication 8 ou 9, caractérisé en ce que la granulométrie de la dolomie naturelle crue et de la calcite naturelle crue est comprise entre 0 et 1 mm.

**11)** Revêtement réfractaire selon la revendication 10, caractérisé en ce qu'il comprend entre 15 et 40 % de particules de granulométrie inférieure à 0,1 mm.

**12)** Revêtement réfractaire selon l'une des revendications 8 à 11, caractérisé en ce que sa densité après séchage et cuisson est inférieure à 1500 kg/m³.

**13)** Revêtement réfractaire selon la revendication 12, caractérisé en ce que sa densité après séchage et cuisson est comprise entre 1100 et 1400 kg/m³.

**14)** Revêtement réfractaire selon l'une des revendications 8 à 13, caractérisé en ce que le liant est du silicate de sodium.

**15)** Revêtement réfractaire selon l'une des revendications 8 à 14, caractérisé en ce que le plastifiant est de l'argile.

**16)** Revêtement réfractaire selon l'une des revendications 8 à 15, caractérisé en ce qu'il comprend également au moins un minéralisateur dans une proportion initiale inférieure ou égale à 5 % en poids.

**17)** Revêtement réfractaire selon la revendication 16, caractérisé en ce que ledit minéralisateur est un composé du bore.

**18)** Revêtement réfractaire selon la revendication 16, caractérisé en ce que ledit minéralisateur est un chlorure d'un métal alcalin.
